# EUROPEAN PATENT SPECIFICATION

(11) **EP 0 784 548 B1**
(45) Date of publication and mention of the grant of the patent: **12.01.2000**
(21) Application number: 95900956.4
(22) Date of filing: 30.09.1994
(51) Int. Cl.: B60R 21/26

(54) **MEANS AND METHOD FOR FILLING AN AIRBAG**
EINRICHTUNG UND VERFAHREN ZUM FÜLLEN EINES LUFTSACKES
PROCEDE ET DISPOSITIF DE REMPLISSAGE D'UN COUSSIN GONFLABLE

(43) Date of publication of application: 23.07.1997
(73) Proprietor: AGA AKTIEBOLAG, 181 81 Lidingö (SE)
(72) Inventor: SVENSSON, Orvar, S-183 39 Täby (SE)
(74) Representative: Axelsson, Rolf
(86) International application number: SE9400916
(87) International publication number: WO9610496

(56) References cited:
- WO-A-94/26562
- DE-A- 2 501 602
- DE-A- 4 231 356
- GB-A- 2 281 228

## Description

The present invention relates to an apparatus for inflating an empty, flexible container with gas essentially immediately when an automotive vehicle in which the container is fitted is subjected to powerful retardation forces, said container being intended to prevent injury to or to reduce the extent of injury suffered by a person seated in the vehicle, for instance in the event of a collision. More specifically, the present invention refers to an apparatus for filling a vehicle-mounted empty, flexible container with gas essentially instantaneously when the container is subjected to powerful retardation forces, wherein the gas-filled container functions as a force-absorbing cushion which protects against injuries, which apparatus includes a first pressure receptacle which is filled with oxygen and an inert gas under high pressure; a second pressure receptacle which is filled with an inert gas and hydrogen, each of said first and second receptacles being closed by means of a respective closure means which will open when subjected to retardation forces that exceed a smallest value, and connected to the flexible container by passage means conveying gas to the flexible container upon opening of the closure means; a container-holding device; retardation meter; and ignition device, said inert gas being helium, argon and/or nitrogen.

Moreover, the present invention refers to a method of filling a vehicle-mounted empty, flexible container using an apparatus of the above kind.

Some cars are equipped with airbags as an alternative to or supplementary to safety belts. In the event of a collision, the airbags are inflated extremely quickly in front of the driver or passengers, so as to protect the driver or passengers from any injury that they might otherwise suffer if thrown forwards against the steering wheel of the vehicle or the instrument panel.

At the time of drafting this document, automotive vehicles were not fitted with airbags for backseat passengers. This is possibly because very large bags would be needed in the rear vehicle seat, which in turn is probably associated with a number of problems of a purely gas kinetic nature.

In the event of a head-on collision, or in the event of any type of collision in which the vehicle is brought to an abrupt halt, it must be possible to inflate the bag with gas before the driver or passenger, who continue to move at the original speed of the vehicle, strikes the back of the front seat or is thrown against the steering wheel and/or the instrument panel.

In order to obtain effective protection, it is estimated that the airbag or like cushion must be inflated within one-hundredth of a second.

Assuming that a car is traveling at a speed of 110 km/hour when a collision occurs, a person seated in the car will through a distance of about 0.3 metre in relation to the ground in this space of time. Since the actual body of the vehicle will not stop immediately, by virtue of the front of the vehicle buckling inwards through a distance of one or more decimeters, the driver of the vehicle or passengers carried therein will move forwards through a distance of from about one to two decimeters relative to the vehicle body in the space of 0.01 seconds, in which case the cushion or bag has time to inflate and therewith prevent the driver or passengers being thrown onto the driving wheel, the instrument panel or the backrest of the front seat.

When a gas expands in the absence of an exchange of energy (isoenthalpy), as in the present case, the temperature will normally fall in accordance with the so-called Joule-Thompson effect.

In the case of air or nitrogen, which is permitted to expand from 400 to 2 bars, the temperature will fall by about 70 to 100 degrees. When the gas is stored in high-pressure containers, as in the case with airbags, it is necessary either to supply corresponding heat to the gas so as to obtain the volume that would be obtained at room temperature, or the pressure container must be filled with about 30 percent more gas.

In addition to this drop in temperature, it must be remembered that air, nitrogen and other gases have a compressibility factor of about 1.2 at 400 bars, which must be taken into account when dimensioning the bag since otherwise the pressure or the volume must be increased to a corresponding degree in comparison with what would have been the case of an ideal gas.

Another problem encountered with all heavy gases is that the outflow velocity of the gas in the present case would be relatively low, since this gas velocity is a function of both molecular weight and temperature.

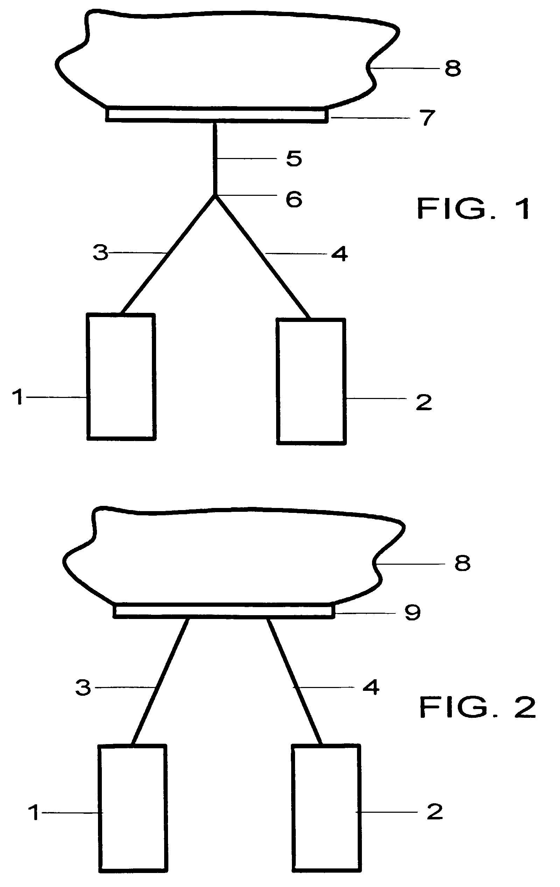

DE-A-4 231 356 discloses in Fig 1 an apparatus of the initially defined type. This known apparatus comprises two gas receptacles and a combustion chamber provided upstream of an inflatable, flexible container and having ignition means for initiating the combustion of the gases from the receptacles in the combustion chamber. In the embodiments of Fig 1-4 the combustion chamber is separated from the flexible container by means of an end wall in the form of a burst disk which in certain embodiments bursts when the pressure in the combustion chamber reaches a predetermined level. In the embodiment of Fig 6 said burst disk is replaced by a flow control orifice controlling the gas flow rate to the inflatable container and the pressure in the combustion chamber. In that case no free flow of gas from the receptacles to the inflatable container is possible.

DE-A-2 501 602 discloses another type of apparatus for filling a vehicle-mounted empty, flexible container with gas when the container is subjected to powerful retardation forces. The apparatus includes a pressure receptacle which is filled with pressurized gas to be expanded for filling the flexible container upon said retardation, and an ignition chamber comprising a medium to be ignited for raising the temperature of the expanding gas during filling of the flexible container.

### SUMMARY OF THE INVENTION

One object of the present invention is to provide apparatus and a method for filling an empty, flexible container or cushion with gas essentially instantaneously in the event of powerful retardation of the vehicle in which the container or cushion is filled, said gas-filled container functioning as a force-absorbing cushion so as to reduce the extent to which injuries are sustained.

This object is realized in accordance with the invention with the apparatus and the method which are initially defined and have the characteristic features set forth in the independent apparatus Claim 1 and the independent method Claim 9. Advantageous embodiments are defined in the dependent Claims 2-8, 10, 11.

### BRIEF DESCRIPTION OF THE DRAWINGS

The invention will now be described in more detail with reference to the accompanying drawing, in which Figure 1 illustrates schematically two gas containers connected to a conduit which in turn is connected to a partially filled gas cushion: and Figure 2 illustrates schematically another embodiment in which each of the two gas containers is connected to the gas cushion by a separate conduit.

### DETAILED DESCRIPTION OF DIFFERENT EMBODIMENTS

Shown in Figure 1 is a main conduit 5 which extends to a gas cushion 8, which is shown partially filled. The gas cushion is mounted in a holder 7. The end of the main conduit 5 distal from the gas cushion 8 branches at 6 into two connection conduits 3 and 4, each of which is connected to a compressed-gas container 1 and 2. The outlets of the gas containers 1 and 2 are provided with a weakening, for instance in the form of a bursting plate or disc which functions to provide instantaneous free passage of the gas in respective containers. This free passage of the gas is created simultaneously in the event of retardation forces (collision forces) that are powerful enough to burst the plate. The containers 1 and 2 together contain the volume of gas needed to fill the gas cushion.

The empty gas cushion 8 is secured in the holder 7. An ignition device, which may be a spark-generating device, is mounted in the main conduit 5 adjacent its outlet orifice facing towards the gas cushion 8, or in the vicinity of the outlet orifice of the holder 7, or in the gas cushion adjacent the outlet opening of the conduit 5.

The first container 1 is filled with an inert gas, for instance with argon, helium, nitrogen or a mixture of two or more of these gases. The container 1 also contains oxygen. The amount of oxygen present in the container 1 corresponds to between 2.5 and 20 percent by volume of the total volume of gas in the two containers 1 and 2. The other container 2 is also filled with inert gas, and contains hydrogen in an amount corresponding to 3-15 percent by volume of the total volume of gas in the two containers 1 and 2. The containers 1 and 2 will preferably contain the same inert gas or gas mixture. Helium is the gas that is most preferred.

When the vehicle is subjected to powerful retardation forces, the weakening at the outlet of the gas containers, in a preferred embodiment bursting plates, will rupture and therewith create an opening through which gas is able to flow to the main conduit 5 from both containers. When a given predetermined amount of gas has flown into the flexible cushion 8, the ignition means will generate a spark which causes the oxygen-hydrogen mixture to explode and therewith react to form water. The temperature is raised considerably by this reaction, which more than compensates for the cooling effect generated by the free expansion of nitrogen and argon. This enables the amount of gas required to fill the air cushion to be significantly reduced.

Because it is not safe to store an oxygen-hydrogen mixture in one and the same container, these gases are stored separately in separate containers 1 and 2, which are opened simultaneously so that the gases will mix prior to reaching the air cushion.

It is extremely important to ensure that the pressurized containers 1, 2 used to fill gas cushions in the event of a collision will not leak and that they will remain pressurized at the requisite pressure for many years after being filled. Because highly sensitive helium-leakage testing devices are commercially available, it is appropriate to include helium as a constituent of the gas used in this regard.

Figure 2 illustrates another embodiment which includes two gas containers 1, 2 and a separate conduit 3 and 4 extending from respective containers. These conduits 3, 4 are connected to the gas cushion 8 through the medium of a mixer 9, which may also function as a holding device. The mixer 9 includes a mixing chamber having a plurality of openings that connect with the gas cushion. The mixer will present very little resistance to the flow of gas to the gas cushion 8. In this case, the ignition device is preferably mounted in the mixing chamber.

According to the present invention, the gas mixture is ignited when at least 30 percent of the total gas volume of the two gas containers has passed into the gas cushion 8. This ignition may be caused to occur when a predetermined time period has lapsed after opening the two containers 1 and 2. The rate at which the gas cushion 8 is filled will decrease with time, because the pressure drop in the gas containers 1 and 2 will not permit all of the available gas volume to fill the gas cushion 8.

Ignition of the gas mixture results in a marked and rapid increase in the temperature of the whole volume of gas in the gas container, which, in turn, results in a significant increase in the volume of gas in the gas cushion. According to the invention, the mixture is ignited when at least 30 percent of the total volume of gas in the containers 1 and 2 has passed through the mixer, the volumetric capacity of which is normally small in relation to the volumetric capacity of the gas cushion. However, the gas mixture may be ignited when only a small volume of gas has reached the cushion, e.g. a volume of 10 percent. It is preferred, however, that at least 75 percent of the total volume of gas in the containers will have passed into the flexible gas cushion before the gas mixture is exploded. According to one particularly preferred embodiment, the gas cushion will contain from 80 to 90 percent of the total gas volume when the gas mixture is ignited.

## Claims

1. Apparatus for filling a vehicle-mounted empty, flexible container (8) with gas essentially instantaneously when the container is subjected to powerful retardation forces, wherein the gas-filled container (8) functions as a forceabsorbing cushion which protects against injuries, which apparatus includes a first pressure receptacle (1) which is filled with oxygen and an inert gas under high pressure; a second pressure receptacle (2) which is filled with an inert gas and hydrogen, each of said first and second receptacles (1, 2) being closed by means of a respective closure means which will open when subjected to retardation forces that exceed a smallest value, and connected to the flexible container (8) by passage means (3, 4, 5) conveying gas to the flexible container upon opening of the closure means; a container-holding device (7); retardation meter; and ignition device, said inert gas being helium, argon and/or nitrogen, **characterized** in that said passage means comprise conduits (3, 4) which are connected to a respective receptacle (1, 2) so that the flexible container (8) is supplied with a mixture of the gases from the receptacles when the closure means are opened, and in that the ignition device is mounted in the vicinity of the gas mixture inlet of the flexible container (8) so that the gas mixture is ignited in the flexible container (8).

2. Apparatus according to Claim 1, **characterized** in that the connection conduits (3, 4) extend to a common conduit (5) forwardly of the flexible container (8), or discharge into a mixing chamber (9) in flow connection with the flexible container (8).

3. Apparatus according to Claim 2, **characterized** in that the ignition device is mounted in or adjacent to the outlet orifice of the common conduit (5).

4. Apparatus according to Claim 2, **characterized** in that the ignition device is mounted in the mixing chamber (9).

5. Apparatus according to one or more of the preceding Claims, **characterized** in that hydrogen is present in an amount corresponding to 3-15 percent by volume of the total gas volume in the two receptacles (1, 2).

6. Apparatus according to one or more of the preceding Claims, **characterized** in that oxygen is present in an amount corresponding to 2.5-20 percent by volume of the total volume of gas in the two receptacles (1, 2).

7. Apparatus according to one or more of the preceding Claims, **characterized** in that the pressure receptacles (1, 2) have mutually the same volumetric capacity.

8. Apparatus according to one or more of the preceding Claims, **characterized** in that the inert gas is helium.

9. A method of filling a vehicle-mounted empty, flexible container with gas essentially instantaneously when the container is subjected to powerful retardation forces, wherein the gas-filled container functions as a forceabsorbing cushion which protects against injuries, which method makes use of a first pressure receptacle which is filled with oxygen and an inert gas under high pressure; a second pressure receptacle which is filled with an inert gas and hydrogen, each of said first and second receptacles being closed by means of a respective closure means which will open when subjected to retardation forces that exceed a smallest value, and connected to the flexible container by passage means conveying gas to the flexible container upon opening of the closure means; and wherein said inert gas is helium, argon and/or nitrogen, **characterized by** using as said passage means conduits supplying the flexible container with a mixture of the gases from the receptacles when the closure means are opened, and by igniting said gas mixture in the flexible container (8) by means of an ignition device mounted in the vicinity of the gas mixture inlet of the flexible container.

10. A method according to Claim 9, **characterized by** igniting said gas mixture in the flexible container when at least 10 percent, preferably at least 30 percent, of the total gas volume in the receptacles has passed into the flexible container.

11. A method according to Claim 9, **characterized by** igniting said gas mixture when at least 75 percent, preferably 80-90 percent, of the total gas volume in the receptacles has passed into the flexible container.

## Patentansprüche

1. Vorrichtung zum Füllen eines in einem Fahrzeug angebrachten leeren flexiblen Behälters (8) mit Gas im wesentlichen sofort, wenn der Behälter starken Verzögerungskräften ausgesetzt wird, wobei der gasgefüllte Behälter (8) als ein Kräfte aufnehmendes Kissen wirkt, das gegen Verletzungen schützt, welche Vorrichtung ein erstes Druckbehältnis (1), das mit Sauerstoff und einem inerten Gas unter hohem Druck gefüllt ist; ein zweites Druckbehältnis (2), das mit einem inerten Gas und Wasserstoff gefüllt ist, wobei jedes der ersten und zweiten Behältnisse (1, 2) mit Hilfe eines Verschlußmittels verschlossen ist, das sich öffnen wird, wenn es Verzögerungskräften ausgesetzt wird, die einen kleinsten Wert überschreiten, und mit dem flexiblen Behälter (8) mit Hilfe von Durchlaßmitteln (3, 4, 5) verbunden sind, die Gas dem flexiblen Behälter bei Öffnen der Verschlußmittel zuführen; eine Behälterhalteeinrichtung (7); eine Verzögerungsmeßeinrichtung; und eine Zündeinrichtung einschließt, welches inerte Gas Helium, Argon und/oder Stickstoff ist, dadurch gekennzeichnet, daß die Durchlaßmittel Leitungen (3, 4) aufweisen, die mit einem Behältnis (1, 2) verbunden ist, so daß der flexible Behälter (8) mit einer Mischung der Gase von den Behältnissen gespeist wird, wenn die Verschlußmittel geöffnet werden, und daß die Zündeinrichtung in der Nähe des Gasmischungseinlasses des flexiblen Behälters (8) angebracht ist, so daß die Gasmischung im flexiblen Behälter (8) gezündet wird.

2. Vorrichtung nach Anspruch 1, dadurch gekennzeichnet, daß die Verbindungsleitungen (3, 4) sich zu einer gemeinsamen Leitung (5) vor dem flexiblen Behälter (8) erstrecken oder sich in eine Mischkammer (9) in Strömungsverbindung mit dem flexiblen Behälter (8) entleeren.

3. Vorrichtung nach Anspruch 2, dadurch gekennzeichnet, daß die Zündeinrichtung in der Auslaßöffnung oder nahe der Auslaßöffnung der gemeinsamen Leitung (5) angebracht ist.

4. Vorrichtung nach Anspruch 2, dadurch gekennzeichnet, daß die Zündeinrichtung in der Mischkammer (9) angebracht ist.

5. Vorrichtung nach einem oder mehreren der vorangehenden Ansprüche, dadurch gekennzeichnet, daß Wasserstoff in einer Menge vorhanden ist, die 3 bis 15 Vol.-% des gesamten Gasvolumens in den beiden Behältnissen (1, 2) entspricht.

6. Vorrichtung nach einem oder mehreren der vorangehenden Ansprüche, dadurch gekennzeichnet, daß Sauerstoff in einer Menge vorhanden ist, die 2,5 bis 20 Vol.-% des gesamten Gasvolumens in den beiden Behältnissen (1, 2) entspricht.

7. Vorrichtung nach einem oder mehreren der vorangehenden Ansprüche, dadurch gekennzeichnet, daß die Druckbehält-nisse (1, 2) dieselbe volumenmäßige Speicherfähigkeit haben.

8. Vorrichtung nach einem oder mehreren der vorangehenden Ansprüche, dadurch gekennzeichnet, daß das inerte Gas Helium ist.

9. Verfahren zum Füllen eines in einem Fahrzeug angebrachten leeren flexiblen Behälters mit Gas im wesentlichen sofort, wenn der Behälter starken Verzögerungskräften ausgesetzt wird, wobei der gasgefüllte Behälter als ein Kräfte aufnehmendes Kissen wirkt, das gegen Verletzungen schützt, welches Verfahren ein erstes Druckbehältnis, das mit Sauerstoff und einem inerten Gas unter hohem Druck gefüllt ist und ein zweites Druckbehältnis verwendet, das mit einem inerten Gas und Wasserstoff gefüllt ist, wobei jedes der ersten und zweiten Behältnisse mit Hilfe eines Verschlußmittels verschlossen ist, das sich öffnen wird, wenn es Verzögerungskräften ausgesetzt wird, die einen kleinsten Wert überschreiten, und mit dem flexiblen Behälter mit Hilfe von Durchlaßmitteln verbunden sind, die Gas zum flexiblen Behälter leiten, wenn sich die Verschlußmittel öffnen; und wobei das inerte Gas Helium, Argon und/oder Stickstoff ist, gekennzeichnet durch die Verwendung von Leitungen als Durchlaßmittel, die den flexiblen Behälter mit einer Mischung der Gase von den Behältnissen speisen, wenn die Verschlußmittel geöffnet werden, und durch zünden der Gasmischung im flexiblen Behälter (8) mit Hilfe einer Zündungseinrichtung, die in der Nähe des Gasmischungseinlasses des flexiblen Behälters angebracht ist.

10. Verfahren nach Anspruch 9, gekennzeichnet durch das Zünden der Gasmischung im flexiblen Behälter, wenn wenigstens 10 %, vorzugsweise wenigstens 30 % des gesamten Gasvolumens in den Behältnissen in den flexiblen Behälter gelangt ist.

11. Verfahren nach Anspruch 9, gekennzeichnet durch Zünden der Gasmischung, wenn wenigstens 75 %, vorzugsweise 80 bis 90 % des gesamten Gasvolumens in den Behältnissen in den flexiblen Behälter gelangt ist.

## Revendications

1. Appareil pour remplir de gaz, essentiellement instantanément, un récipient vide, flexible, (8) monté sur un véhicule, lorsque le récipient est soumis à de puissantes forces de décélération, le récipient (8) rempli de gaz fonctionnant comme un coussin absorbant les forces qui protege contre les blessures, appareil qui comporte un premier réceptacle sous pression (1) rempli d'oxygène et d'un gaz inerte sous haute pression, un second réceptacle sous pression (2) rempli d'un gaz inerte et d'hydrogène, chacun desdits premier et second réceptacles (1, 2) étant obturé par un moyen d'obturation respectif qui s'ouvrira s'il est soumis à des forces de décélération qui excèdent une valeur minimale, et étant relié au récipient flexible (8) par des moyens formant passage (3, 4, 5) qui transportent le gaz au récipient flexible lors de l'ouverture des moyens d'obturation ; un dispositif (7) maintenant le récipient ; un décéléromètre et un dispositif d'inflammation, ledit gaz inerte étant de l'hélium, de l'argon et/ou de l'azote caractérisé par le fait que lesdits moyens formant passage comportent des conduits (3, 4) qui sont reliés à un réceptacle respectif (1, 2) de façon que le récipient flexible (8) soit alimenté en un mélange des gaz provenant des réceptacles lorsque les moyens d'obturation s'ouvrent et par le fait que le dispositif d'inflammation est monte au voisinage de l'entrée du récipient flexible (8) pour le mélange de gaz de sorte que le mélange de gaz s'enflamme dans le récipient flexible (8).

2. Appareil selon la revendication 1, caractérisé par le fait que les conduits de liaison (3, 4) s'étendent jusqu'à un conduit commun (5) situé en avant du récipient flexible(8) ou se déchargent dans une chambre de mélange (9) fluidiquement reliée au récipient flexible (8).

3. Appareil selon la revendication 2, caractérisé par le fait que le dispositif d'inflammation est monté dans, ou adjacent à, l'orifice de sortie du conduit commun (5).

4. Appareil selon la revendication 2, caractérisé par le fait que le dispositif d'inflammation est monté dans la chambre de mélange (9).

5. Appareil selon l'une ou plusieurs des revendications précédentes, caractérisé par le fait que l'hydrogène est présent dans une proportion correspondant à 3-15 pour cent en volume du volume total de gaz présent dans les deux réceptacles (1, 2).

6. Appareil selon l'une ou plusieurs des revendications précédentes, caractérisé par le fait que l'oxygène est présent dans une proportion correspondant à 2,5-20 pour cent en volume du volume total de gaz présent dans les deux réceptacles (1, 2).

7. Appareil selon l'une ou plusieurs des revendications précédentes, caractérisé par le fait que les réceptacles sous pression (1, 2) ont mutuellement la même capacité volumétrique.

8. Appareil selon l'une ou plusieurs des revendications précédentes, caractérisé par le fait que le gaz inerte est l'hélium.

9. Procédé pour remplir de gaz, essentiellement instantanément. un récipient vide, flexible, monté sur un véhicule, lorsque le récipient est soumis à de puissantes forces de décélération, le récipient rempli de gaz fonctionnant comme un coussin absorbant les forces qui. protège contre les blessures, procédé qui utilise un premier réceptacle sous pression rempli d'oxygène et d'un gaz inerte sous haute pression, un second réceptacle sous pression rempli d'un gaz inerte et d'hydrogène, chacun desdits premier et second réceptacles étant obturés par un moyen d'obturation respectif qui s'ouvrira s'il est soumis à des forces de décélération qui excèdent une valeur minimale, et étant relié au récipient flexible (8) par des moyens formant passage (3, 4, 5) qui transportent le gaz au récipient flexible lors de l'ouverture des moyens d'obturation; et ledit gaz inerte étant de l'hélium, de l'argon et/ou de l'azote, caractérisé par l'utilisation, comme dits moyens de passage, de conduits alimentant le récipient flexible en un mélange des gaz provenant des réceptacles lorsque les moyens d'obturation s'ouvrent, et par l'inflammation dudit mélange de gaz se trouvant dans le récipient flexible (8) au moyen d'un dispositif d'inflammation monté au voisinage de l'entrée du récipient flexible pour le mélange de gaz.

10. Procédé selon la revendication 9. caractérisé par l'inflammation dudit mélange de gaz se trouvant dans le récipient flexible lorsqu'au moins 10 pour cent, de préférence au moins 30 pour cent, du volume total de gaz se trouvant dans le réceptacle sont passés dans le récipient flexible.

11. Procédé selon la revendication 9, caractérisé par l'inflammation dudit mélange de gaz lorsqu'au moins 75 pour cent, de préférence 80-90 pour cent, du volume total de gaz se trouvant dans le réceptacle sont passés dans le récipient flexible.
